# EUROPÄISCHE PATENTANMELDUNG

(11) **EP 1 042 950 A1**
(43) Veröffentlichungstag der Anmeldung: **11.10.2000**
(21) Anmeldenummer: 00106494.8
(22) Anmeldetag: 25.03.2000
(51) Int. Cl.: A01F 15/08

(54) **Grossballenpresse**

(30) Priorität: 03.04.1999 DE 19915312
(71) Anmelder: Case Harvesting Systems GmbH, 01844 Neustadt (DE)
(72) Erfinder: Prellwitz, Hubert, 01844 Neustadt (DE)
(74) Vertreter: Müller, Lutz

(57) **Zusammenfassung**

Die Erfindung betrifft eine Großballenpresse zur Herstellung quaderförmiger Ballen aus land- und forstwirtschaftlichen Kulturen und nachwachsenden Rohstoffen.
Diese Großballenpresse soll formstabile Ballen hoher Preßdichte herstellen, wobei die vorgegebene Ballenlänge sehr exakt sein soll und deren Herstellungskosten etwas niedriger liegen.
Das wird erreicht, indem im Bereich der Vorderfront (7) des Preßkolbens (6) in seiner inneren Totpunktlage am Boden (9) und/oder an der Decke (10) des Preßkanales (5) eine Rückhalteeinrichtung (14) angeordnet ist, die aus einer quer zur Preßrichtung zeigenden Welle (15) besteht, auf der zumindest zwei voneinander beabstandete und Zacken (18) aufweisende Sternräder (16) drehfest angebracht sind. Die Sternräder (16) sind nur in Preßrichtung verdrehfähig. Die Rückhalteeinrichtung (14) dient gleichzeitig als Meßeinrichtung (41) für die-Ballenlänge.

## Beschreibung

Die Erfindung betrifft eine Großballenpresse zur Herstellung quaderförmiger Ballen aus land- und forstwirtschaftlichen Kulturen und nachwachsenden Rohstoffen mit den Merkmalen nach dem Oberbegriff des 1. Patentanspruches sowie des selbständigen 5. Nebenanspruches.

Derartige Großballenpressen werden vordergründig zum Einbringen landwirtschaftlicher Erntegüter eingesetzt, die in vielfältiger Weise einer weiteren Verwertung zugeführt werden. So dient zum Beispiel Stroh einmal als Düngergrundlage für landwirtschaftlich und gärtnerisch genutzte Flächen oder als Einstreu in der Tierhaltung. Zum anderen wird es heute auch in ganz erheblichem Maße einer industriellen Verwertung zur Herstellung anderweitiger Produkte, wie zum Beispiel für Verpackungsmaterial, Füllstoffe, Dämmstoffe etc. zugeführt. Darüber hinaus werden Heu und Welkgut zunehmend für die Bevorratung und zur Herstellung von Silage zu Ballen verpreßt, wodurch eine effektivere Bewirtschaftung in der Tierhaltung möglich ist.
Durch die Vielzahl genannter Verwertungsmöglichkeiten ist es notwendig, die Ballen an die Endverbraucher oft über weite Strecken zu transportieren, wozu aus Kostengründen die maximale Auslastung der eingesetzten Transportkapazitäten dringend geboten ist. Um das zu garantieren, ist die genaue Einhaltung der vorgegebenen Ballenlänge wichtig. Darüber hinaus ist aber auch die Formstabilität der Ballen zu sichern, damit sie nicht schon auf dem Transportwege auseinanderfallen. Schließlich ist es aus Kostengründen noch von Bedeutung, den materiellen Herstellungsaufwand für solche Großballenpressen in Grenzen zu halten, da es sich hierbei um sehr kostenintensive Maschinen handelt. Eine Ausführung einer derartigen Großballenpresse ist in der EP 0 819 375 A1 in Verbindung mit der DE 197 18 831 A1 offenbart, wo am Boden und an der Decke des Preßkanales feststehende Zackenschienen angebracht sind, um das in Preßrichtung gesehene hintere Ende des zu bildenden Ballens am Rückfedern nach dem Rücklauf des Preßkolbens zu hindern, was eine Grundvoraussetzung für gleichmäßig geformte Ballen ist. Diese Wirkung ist jedoch sehr eingeschränkt, weil einmal bereits der in Preßrichtung gesehene vordere Zacken eine Längsnut in den Ballen reißt, so daß die hinteren Zacken im Ballen nur noch schwer Halt finden. Zum anderen ist bei der Verwendung von starren Zackenschienen von der inneren Totpunktlage des Preßkolbens aus gesehen ein Rückfederweg des letzten Preßpaketes von etwa 50 Millimetern nötig, weil das Preßpaket dazu auch in der Höhe expandieren muß. Beide Gründe führen zur Verminderung der Preßdichte, weil das vorletzte Preßpaket noch einmal verdichtet werden muß. Da Ballen mit steigender Preßdichte auch formstabiler sind, geht die verminderte Preßdichte natürlich auch gegen deren Formstabilität.
Zum Einstellen der Ballenlänge ist diese Großballenpresse mit einem Sternrad ausgestattet, das mit seinen Zacken in die Oberseite der Ballen einspießt und durch deren Vorwärtsrücken in Preßrichtung in Rotation versetzt wird. In die Lagerung der Nabe des Sternrades auf deren Achse ist ein Sensorlager eingesetzt, das die Vorwärts- und Rückwärtsbewegung des Sternrades ermittelt und an eine Auswerteelektronik weitergibt. Die Auswerteelektronik addiert die Meßwerte zu einem Ist-Längenwert und löst bei annäherndem Erreichen des Soll-Längenwertes die Bindeeinrichtungen aus. Nachteilig an dieser Einrichtung ist deren Ungenauigkeit der Meßwerte, da über die Breite des Ballens gesehen Erntegutlücken durch ungleichmäßige Befüllung in der Breite entstehen können. Den gleichen nachteiligen Effekt bringt eine ungenügende Ausfüllung des Preßkanales in der Höhe mit sich, was häufig bei geringem Erntegutangebot vorkommen kann.
Eine weitere Ausführung einer Großballenpresse ist mit der DE 295 11 023 U1 bekannt geworden, deren Preßkanal am hinteren, oberen Ende ein Sternrad aufweist, das mit einem Meßaufnehmer gekoppelt ist, der kontinuierlich die Länge des Preßstranges unabhängig von der eingestellten Ballenlänge mißt. Der Meßaufnehmer ist so mit dem Sternrad gekoppelt, daß er lediglich die in Preßrichtung gerichtete Verschiebung des Preßstranges registriert. Dazu werden Sensoren eingesetzt, die entweder nur die Vorwärtsbewegung aufnehmen oder die Vorwärtsbewegung von der Rückwärtsbewegung unterscheiden können. Zusätzlich ist diese Großballenpresse noch mit einem weiteren Sternrad am Boden des Preßkanales ausgestattet, das über eine Betätigungseinrichtung dann die Bindeeinrichtung auslöst, wenn die gewünschte Ballenlänge erreicht ist. Bezüglich der Meßgenauigkeit gelten die gleichen Nachteile wie bei der vorstehend beschriebenen Großballenpresse, weil auch hier die ungenügende Ausfüllung des Preßkanales in der Breite und der Höhe die Meßwerte verfälscht.
Obwohl es in der DE 295 11 023 U1 nicht dargestellt ist, ist diese Großballenpresse zur Verminderung des Rückfederns des hinteren Endes des gerade zu bildenden Ballens auch nur mit Zackenschienen am Boden und an der Decke des Preßkanales ausgestattet, so daß wie bei der Großballenpresse nach der EP 0 819 375 A1 die Formstabilität der Ballen zu wünschen übrig läßt. Schließlich ist noch ihre kostenintensive Herstellung zu bemängeln, da zwei Meßeinrichtungen mit dem entsprechenden Zubehör zur Weiterleitung und Sichtbarmachung der Meßwerte und zur Auslösung der Bindeeinrichtung vorgesehen sind.
Eine dritte Ausführung einer Großballenpresse stammt vom Anmelder selbst, die in der Betriebsanleitung für die Typen 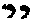 540/550" in der 2. Ausgabe, Modell 98, veröffentlicht ist. Sie besitzt ebenfalls die am Boden und an der Decke des Preßkanales befestigten Zackenschienen zur Verminderung des Rückfederns des hinteren Endes des gerade zu bildenden Ballens, wenn der Preßkolben seine innere Totpunktlage verlassen hat, um nachfolgend einen erneuten Preßhub auszuführen. Die damit verbundenen Nachteile sind vorstehend genannt.

Zum Einstellen der Ballenlänge ist nur am Boden des Preßkanales dieser Großballenpresse ein Sternrad drehbar gelagert befestigt, das durch die vorrückenden Ballen in Rotation versetzt wird, weil seine Zacken in deren Unterseite einspießen. Obwohl dieser Ort der Anbringung Meßfehler durch ungenügende Ausfüllung des Preßkanales in der Höhe ausschließt, verbleiben dennoch die Ungenauigkeiten in der Messung der Ballenlänge bei ungleichmäßiger Ausfüllung des Preßkanales über dessen Breite. Dieser vorteilhaftere Ort der Anbringung des Sternrades ist aber andererseits ein kostenerhöhender Faktor in der Herstellung der Großballenpresse, weil das Sternrad dadurch so weit weg von der Bindeeinrichtung angebracht ist, daß zusätzliche Antriebsübertragungsmittel in Form einer Kette und eines Stirnradtriebes notwendig sind, um die Betätigungseinrichtung der Bindeeinrichtung beim Erreichen des vorgegebenen Ballenmaßes zu aktivieren.

Deshalb liegt der Erfindung die Aufgabe zugrunde, eine Großballenpresse zur Herstellung quaderförmiger Ballen aus land- und forstwirtschaftlichen Kulturen und nachwachsenden Rohstoffen zu schaffen, die formstabile Ballen hoher Preßdichte herstellt, deren voreingestelltes Ballenlängenmaß auch bei nicht immer vollständig mit Erntegut ausgefülltem Preßkanal mit hoher Genauigkeit eingehalten wird und deren Herstellungskosten etwas niedriger liegen.
Diese Aufgabe wird gemäß der Erfindung durch die Merkmale des 1. Patentanspruches sowie des selbständigen 5. Nebenanspruches gelöst, wobei in den darauf rückbezogenen Unteransprüchen Merkmale aufgeführt sind, die diese Lösungen in vorteilhafter Weise weiterentwickeln.
Durch die Ausbildung der Rückhalteeinrichtung als in Preßrichtung frei verdrehbare Welle, die mit wenigstens zwei verdrehfest an ihr angebrachten Sternrädern besetzt ist, reißen die Zacken der Sternräder bei der Ballenbildung in diese keine Nuten. Dadurch haben die Sternräder immer einen festen Halt im Ballen. Immer wenn der Preßkolben nach der Verdichtung einer Erntegutcharge seine innere Totpunktlage verläßt, hält die so erfindungsgemäß ausgebildete Rückhalteeinrichtung das hintere Ende des neu zu bildenden Ballens sicher fest, weil einmal der bereits erwähnte Halt gegeben ist und zum anderen die Drehbewegung der Welle in entgegengesetzter Richtung blockiert ist. Auf diese Weise wird die Rückdehnung des hinteren Endes des zu bildenden und auch des fertigen Ballens wirksam verhindert.
Es hat sich als zweckmäßig und ausreichend erwiesen, die Rückhalteeinrichtung am Boden des Preßkanales anzubringen und an dessen Decke die herkömmlichen Zackenschienen, weil deren sicheres Festhalten an einer Stelle zum Verhindern der Rückdehnung der letzten Erntegutcharge in der Regel genügt. Diese Ausführung ist bei Großballenpressen mit geringerer Preßkanalhöhe besonders zu empfehlen.
In einer bevorzugten Ausführungsvariante ist je ein Sternrad mittig zwischen allen benachbarten Nadelschlitzen im Preßkolben angebracht, damit die spitzen Zacken der Sternräder einerseits das Bindegarn nicht zerreißen können und daß andererseits deren Vielzahl einen sicheren Halt über die gesamte Breite des Ballens gewährleistet.
Für das Blockieren der Drehbewegung der Sternräder entgegen der Preßrichtung bietet es sich an, ein verdrehfest mit der Welle verbundenes Sperrad zu benutzen, in dessen umfangseitige Rastnuten ein schräg angestelltes Halteblech eingreift. Die Federstahlspitze des Haltebleches gleitet dabei in der freigegebenen Drehrichtung leicht über die Rastnuten hinweg und in der gesperrten Drehrichtung stützt es sich in der betreffenden Rastnut ab. Eine entsprechend große Anzahl von Rastnuten stellt sicher, daß ein Rückwärtsdrehen der Sternräder praktisch ausgeschlossen ist.
Die im selbständigen 5. Nebenanspruch beschriebene Ausführung der erfindungsgemäßen Bauart der Großballenpresse sieht vor, die Rückhalteeinrichtung zugleich als Meßeinrichtung für die Länge einzelner Ballen sowie auch eines Ballenstranges für einen vorgegebenen Zeitraum zu nutzen. Dazu muß nur der Verdrehweg der Sternräder mit dafür bekannten Meßeinrichtungen, wie zum Beispiel mit Sensoren, aufgenommen werden. Durch die Verwendung von wenigstens zwei voneinander beabstandeten Sternrädern verfälschen eventuelle Lücken im Ballen durch ungenügende Ausfüllung des Preßkanales das Meßergebnis nicht, da in dem Fall das sich mit dem Ballen im Eingriff befindende andere Sternrad die Verdrehbewegung der gesamten Rückhalte- und Meßeinrichtung bestimmt. Dieser positive Effekt wird mit einer steigenden Anzahl von Sternrädern immer sicherer.
Darüber hinaus bietet es sich an, den Meßwert der Rückhalte- und Meßeinrichtung auch gleich für das Auslösen der Bindeeinrichtung beim Erreichen der gewünschten Ballenlänge einzusetzen. Dazu ist in einer mechanischen Ausführungsvariante die Welle der Rückhalte- und Meßeinrichtung mit einer Verzahnung versehen, die mit der Verzahnung eines hinlänglich bekannten Schaltbügels im Eingriff ist. Durch die Drehbewegung der Welle bewegt sie den Schaltbügel so lange, bis die Vertiefung am Ende der Verzahnung am Schaltbügel erreicht ist und wodurch infolge der Einfallbewegung die mit dem Schaltbügel gelenkig verbundene Schaltangel verdreht wird. Dadurch kommt die Schaltklinke frei und der Antrieb der Bindeeinrichtung wird eingekuppelt.
Damit ergeben sich als Vorteile für die Erfindung, daß durch die sehr wirksame Rückhalteeinrichtung formstabile Ballen hoher Preßdichte entstehen. Darüber hinaus ist bei deren Nutzung als Meßeinrichtung gesichert, daß auch im Falle von stellenweise nicht vollständig ausgefülltem Preßkanal exakte Meßwerte für die Länge einzelner Ballen oder eines Ballenstranges gemessen werden. Schließlich sind die Herstellungskosten für diese Großballenpresse etwas niedriger, da die Rückhalteeinrichtung und die Meßeinrichtung in einer Baugruppe vereinigt sind, wofür es bisher immer nur getrennte Baugruppen gab.

Die Erfindung soll nun anhand eines Ausführungsbeispieles näher erläutert werden, wobei die einzelnen Figuren zeigen:
- Fig. 1:: eine teilweise schematisierte Seitenansicht auf eine Großballenpresse auf deren in Fahrtrichtung gesehenen linken Seite
- Fig. 2:: ein Schnitt A-A nach Fig. 1
- Fig. 3:: eine Ansicht B nach Fig. 2

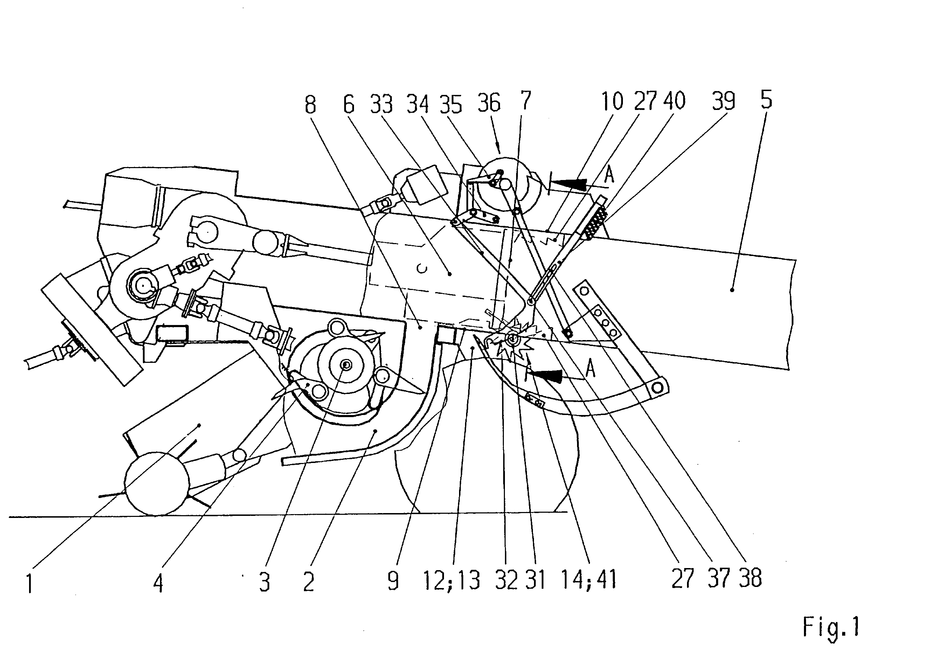

In Figur 1 ist eine Großballenpresse in der Seitenansicht mit teilweise weggelassener Verkleidung zum Erkennen der wichtigsten Funktionsorgane gezeigt. Sie ist an ihrer Frontseite mit einem Adapter 1 ausgestattet, der das Erntegut vom Boden aufnimmt und bis zum unteren Ende des Zuführkanales 2 befördert. Ein über dem Zuführkanal 2 angeordneter Rotorförderer 3 greift mit seinen Zinken 4 in den Zuführkanal 2 ein, befüllt diesen portionsweise und schiebt dann die gesamte Erntegutcharge in den Preßkanal 5 hinein. Ein sich im Preßkanal 5 hin- und herbewegender Preßkolben 6 verdichtet die Erntegutcharge gegen den im Preßkanal 5 steckenden Ballenstrang, indem er mit seiner Vorderfront 7 einen hohen Druck auf die Erntegutcharge gegen den Verschiebewiderstand des Ballenstranges ausübt. In Figur 1 befindet sich der Preßkolben 6 in seiner inneren Totpunktanlage, wo er seine Bewegungsrichtung umkehrt, um die obere Öffnung 8 des Zuführkanales 2 für das Einschieben der nächsten Erntegutcharge freizugeben und danach den nächsten Verdichtungshub auszuführen.
Der Preßkanal 5 ist eine sehr formstabile Konstruktion, der einen Boden 9, eine Decke 10 und beidseitig Gestellwände 11 aufweist und der gemeinsam mit dem Fahrgestell 12 und sonstigen die Baugruppen miteinander verbindenden Trägern und Blechteilen zusammen das Gestell 13 der Großballenpresse bildet.
Unter dem Boden 9 des Preßkanales 5 ist eine Rückhalteeinrichtung 14 für die letzte vom Preßkolben 6 verdichtete Erntegutcharge angeordnet. Sie befindet sich im Bereich der Vorderfront 7 des Preßkolbens 6, wenn er gerade seine innere Totpunktlage einnimmt.

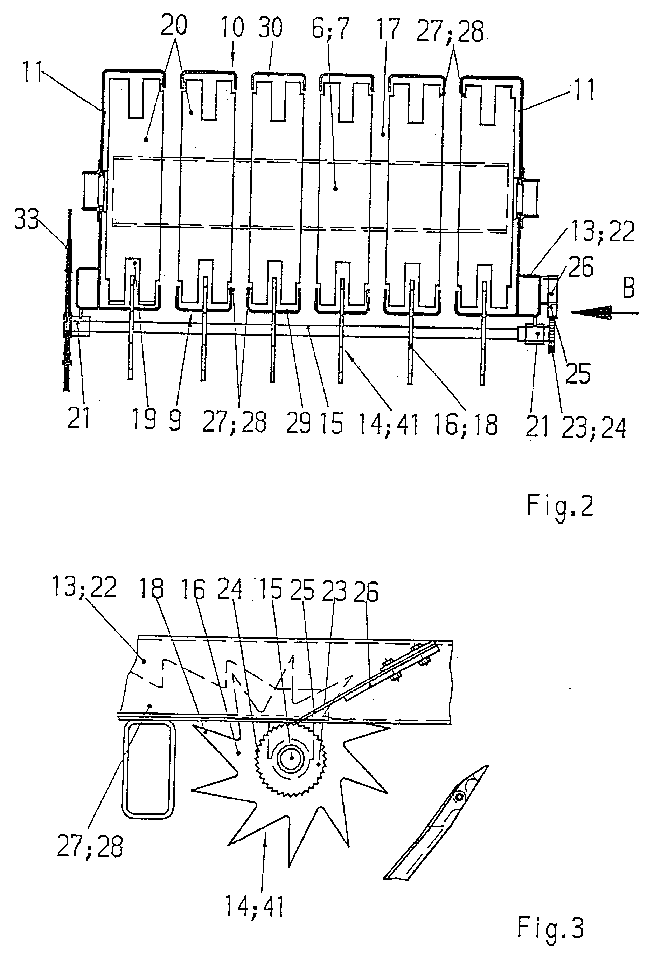

In Figur 2 ist deren konstruktive Ausbildung am besten zu sehen. Sie besteht aus einer quer zur Preßrichtung ausgerichteten Welle 15, an der in diesem Ausführungsbeispiel sechs Sternräder 16 verdrehfest angebracht sind. Über die Breite des Preßkanales 5 gesehen, befinden sie sich mittig zwischen den Nadelschlitzen 17 des Preßkolbens 6, wobei sie mit ihren langen Zacken 18 den Boden 9 des Preßkanales 5 durchdringen und in Aussparungen 19 der einzelnen Segmente 20 des Preßkolbens 6 hineinragen. Die Welle 15 ist beidseitig in Lagerungen 21 verdrehbar aufgenommen, die wiederum an Gestellträgern 22 befestigt sind.
Auf dem in Fahrtrichtung der Großballenpresse gesehenen rechten Ende der Welle 15 nach Figur 3 ist ein Sperrad 23 verdrehfest angebracht, das umfangsseitig Rastnuten 24 trägt. In diese Rastnuten 24 greift die Spitze eines aus Federblech 25 bestehenden Halters 26 ein, dessen der Spitze gegenüberliegendes Ende am rechten Gestellträger 22 angeschraubt ist. Die Längsachse des Halters 26 erstreckt sich dabei in einem spitzen Winkel zu einer an den Kreis der Rastnuten 24 angelegten Tangente, so daß sie wie in der Figur 3 zu sehen auf die Fahrtrichtung bezogen nach vorn oben zeigt.
Als zusätzliche Elemente zum Zurückhalten der letzten Erntegutcharge sind neben der vorstehend beschriebenen Rückhalteeinrichtung 14 am Boden 9 und an der Decke 10 des Preßkanales 5 feststehende Zackenschienen 27 vorgesehen, wobei deren Zacken 28 der Einfachheit halber gleich in die aufwärts bzw. abwärts zeigenden Schenkel der Bodenbleche 29 bzw. der Deckenbleche 30 eingearbeitet sind.
Das in Fahrtrichtung der Großballenpresse gesehene linke Ende der Welle 15 weist eine Verzahnung 31 auf, die mit der Verzahnung 32 am unteren Ende des Schaltbügels 33 im Eingriff ist. Das obere Ende des Schaltbügels 33 ist mit der Schaltangel 34 gelenkig verbunden, die im Augenblick des Erreichens der vorgegebenen Ballenlänge die Schaltklinke 35 freigibt, wodurch die Bindeeinrich tung 36 in Gang gesetzt wird. Der Schaltbügel 33 ist außerdem noch über einen an seinem Rücken angebrachten Bolzen 37 mit dem Langloch 38 einer Einstellstange 39 gelenkig verbunden. Das andere Ende der Einstellstange 39 ist mit einem Lochblech 40 ausgestattet und über dieses mit dem Gestell 13 der Großballenpresse gelenkig verbunden. Damit ist die Rückhalteeinrichtung 14 gleichzeitig Meßeinrichtung 41 für die Ballenlänge.

### Bezugszeichenaufstellung

- 1: Adapter
- 2: Zuführkanal
- 3: Rotorförderer
- 4: Zinken
- 5: Preßkanal
- 6: Preßkolben
- 7: Vorderfront
- 8: Öffnung
- 9: Boden
- 10: Decke
- 11: Gestellwand
- 12: Fahrgestell
- 13: Gestell
- 14: Rückhalteeinrichtung
- 15: Welle
- 16: Sternrad
- 17: Nadelschlitz
- 18: Zacken
- 19: Aussparung
- 20: Segment
- 21: Lagerung
- 22: Gestellträger
- 23: Sperrad
- 24: Rastnuten
- 25: Federblech
- 26: Halter
- 27: Zackenschiene
- 28: Zacken
- 29: Bodenblech
- 30: Deckenblech
- 31: Verzahnung - Welle
- 32: Verzahnung - Schaltbügel
- 33: Schaltbügel
- 34: Schaltangel
- 35: Schaltklinke
- 36: Bindeeinrichtung
- 37: Bolzen
- 38: Langloch
- 39: Einstellstange
- 40: Lochblech
- 41: Meßeinrichtung

## Patentansprüche

1. Großballenpresse zur Herstellung quaderförmiger Ballen, mit einer im Bereich der Vorderfront des Preßkolbens in seiner inneren Totpunktlage am Boden und/oder an der Decke des Preßkanales angeordneten Rückhalteeinrichtung, deren Zacken mit der Unterseite und/oder der Oberseite der Ballen im Eingriff sind, dadurch gekennzeichnet, daß
a) die Rückhalteeinrichtung (14) aus einer quer zur Preßrichtung zeigenden Welle (15) besteht, auf der zumindest zwei voneinander beabstandete und Zacken (18) aufweisende Sternräder (16) drehfest angebracht sind,
b) die Sternräder (16) nur in Preßrichtung verdrehbar im Gestell (13) aufgenommen und in der entgegengesetzten Drehrichtung blockiert sind.

2. Großballenpresse nach Anspruch 1, dadurch gekennzeichnet, daß die aus Sternrädern (16) und einer Welle (15) bestehende Rückhalteeinrichtung (14) nur am Boden (9) des Preßkanales (5) angeordnet ist und an der Decke (9) des Preßkanales (5) befinden sich feststehende Zackenschienen (27).

3. Großballenpresse nach den Ansprüchen 1 und 2, dadurch gekennzeichnet, daß auf der Welle (15) zwischen jedem Nadelschlitz (17) im Preßkolben (6) ein Sternrad (16) angeordnet ist, deren Zacken (18) in Aussparungen (19) der Segmente (20) des Preßkolbens (6) ragen.

4. Großballenpresse nach den Ansprüchen 1 bis 3, dadurch gekennzeichnet, daß ein Sperrad (23) verdrehfest mit der Welle (15) verbunden ist, dessen umfangsseitig angebrachte Rastnuten (24) mit der aus einem Federblech (25) bestehenden Spitze eines Halters (26) im Eingriff stehen, wobei das andere Ende des Halters (26) am Gestell (13) befestigt ist und dessen Längsachse sich in einem spitzen Winkel zu einer an den Kreis der Rastnuten (24) angelegten Tangente erstreckt.

5. Großballenpresse zur Herstellung quaderförmiger Ballen, mit einer im Bereich der Vorderfront des Preßkolbens in seiner inneren Totpunktlage am Boden und/oder an der Decke des Preßkanales angeordneten Rückhalteeinrichtung, deren Zacken mit der Unterseite und/oder der Oberseite der Ballen im Eingriff sind und mit einer die Ballenlänge bzw. die Länge des Ballenstranges feststellenden und gegebenenfalls die Bindeeinrichtung einschaltenden Meßeinrichtung, dadurch gekennzeichnet, daß
a) die Rückhalteeinrichtung (14) aus einer quer zur Preßrichtung zeigenden Welle (15) besteht, auf der zumindest zwei voneinander beabstandete und Zacken (18) aufweisende Sternräder (16) drehfest angebracht sind,
b) die Sternräder (16) nur in Preßrichtung verdrehbar im Gestell (13) aufgenommen und in der entgegengesetzten Drehrichtung blockiert sind,
c) der Verdrehweg der Sternräder (16) bzw. der Welle (15) der Rückhalteeinrichtung (14) dem Längenmaß für die einzelnen Ballen bzw. für den Ballenstrang entspricht, so daß die Rückhalteeinrichtung (14) gleichzeitig Meßeinrichtung (41) ist.

6. Großballenpresse nach Anspruch 5, dadurch gekennzeichnet, daß die Welle (15) der Rückhalteeinrichtung (14) einseitig eine Verzahnung (31) aufweist, die mit einer Verzahnung (32) an dem einen Ende eines Schaltbügels (33) im Eingriff ist, und daß das andere Ende des Schaltbügels (33) mit der Schaltangel (34) zum Auslösen des Bindevorganges gelenkig verbunden ist.
